# EUROPEAN PATENT APPLICATION

(11) **EP 3 922 504 A1**
(43) Date of publication of application: **15.12.2021**
(21) Application number: 20831894.9
(22) Date of filing: 20.03.2020
(51) Int. Cl.: B60L 53/20, H02J 7/02, H02J 7/00

(54) **VEHICLE-MOUNTED CHARGING/DISCHARGING APPARATUS AND SYSTEM**

(30) Priority: 25.06.2019 CN 201910555094
(71) Applicant: Huawei Digital Power Technologies Co., Ltd., Shenzhen, 518043 (CN)
(72) Inventor: LIU, Weiping, Shenzhen, Guangdong 518129 (CN); LIANG, Yongtao, Shenzhen, Guangdong 518129 (CN); FU, Dianbo, Shenzhen, Guangdong 518129 (CN)
(74) Representative: Maiwald Patent- und Rechtsanwaltsgesellschaft mbH
(86) International application number: PCT/CN2020/080521
(87) International publication number: WO 2020/258939

(57) **Abstract**

An on-board charging and discharging apparatus (200) and a system are provided. The apparatus includes: a bidirectional AC/DC conversion circuit (201), a unidirectional DC/DC conversion circuit (202), and a bidirectional DC/DC conversion circuit (203). The bidirectional AC/DC conversion circuit (201) is configured to convert a received first alternating current voltage into a first direct current voltage, or convert a second direct current voltage output by the bidirectional DC/DC conversion circuit (203) into a second alternating current voltage. The unidirectional DC/DC conversion circuit (202) is configured to convert a first component of the first direct current voltage into a third direct current voltage. The bidirectional DC/DC conversion circuit (203) is configured to convert a second component of the first direct current voltage into a fourth direct current voltage, or convert a received fifth direct current voltage into the second direct current voltage. The first component and the second component constitute the first direct current voltage. The on-board charging and discharging apparatus (200) and the system are configured to implement charging and discharging functions.

## Description

### CROSS-REFERENCE TO RELATED APPLICATIONS

This application claims priority to Chinese Patent Application No. 201910555094.1, filed with the China National Intellectual Property Administration on June 25, 2019 and entitled "ON-BOARD CHARGING AND DISCHARGING APPARATUS AND SYSTEM", which is incorporated herein by reference in its entirety.

### TECHNICAL FIELD

This application relates to the field of new energy vehicle (new energy vehicle) technologies, and in particular, to an on-board charging and discharging apparatus and a system.

### BACKGROUND

With the development of technologies in the field of new energy, application of new energy vehicles, for example, electric vehicles (electric vehicles), is increasingly popular. Because infrastructure for fast direct current charging is incomplete at present, on-board chargers (on-board chargers, OBCs) are usually configured for new energy vehicles for charging convenience, so that users can charge power batteries through household alternating current power sockets.

Because users have increasingly high requirements on a driving mileage of new energy vehicles, capacities of power batteries accordingly become larger, and a higher charging power class of the power batteries is also required. Therefore, an OBC generally has a relatively high charging power, to implement fast charging. In addition, to enhance user experience, the OBC may also provide an inverter function, to implement vehicle-to-vehicle (vehicle-to-vehicle, V2V) and vehicle-to-load (vehicle-to-load, V2L) discharging functions. For example, the OBC may charge another power battery or supply power to an on-board electrical device by using the discharge function.

Therefore, an on-board charging and discharging apparatus having charging and discharging functions (V2V and V2L) is urgently needed.

### SUMMARY

Embodiments of this application provide an on-board charging and discharging apparatus and a system, to implement charging and discharging functions.

According to a first aspect, an embodiment of this application provides an on-board charging and discharging apparatus. The on-board charging and discharging apparatus includes a bidirectional alternating current/direct current conversion circuit (bidirectional AC/DC conversion circuit), a unidirectional direct current/direct current conversion circuit (unidirectional DC/DC conversion circuit), and a bidirectional direct current/direct current conversion circuit (bidirectional DC/DC conversion circuit). A direct current terminal of the bidirectional AC/DC conversion circuit is electrically connected to a first direct current terminal of the unidirectional DC/DC conversion circuit and a first direct current terminal of the bidirectional DC/DC conversion circuit. The bidirectional AC/DC conversion circuit may be configured to convert an alternating current voltage into a direct current voltage, or may be configured to convert a direct current voltage into an alternating current voltage. The unidirectional DC/DC conversion circuit may be used for unidirectional conversion between a direct current voltage and a direct current voltage. The bidirectional DC/DC conversion circuit may be used for bidirectional conversion between a direct current voltage and a direct current voltage.

The bidirectional AC/DC conversion circuit is configured to convert a received first alternating current voltage into a first direct current voltage, or convert a second direct current voltage output by the bidirectional DC/DC conversion circuit into a second alternating current voltage.

The unidirectional DC/DC conversion circuit is configured to convert a first component of the first direct current voltage into a third direct current voltage.

The bidirectional DC/DC conversion circuit is configured to convert a second component of the first direct current voltage into a fourth direct current voltage, or convert a received fifth direct current voltage into the second direct current voltage. The first component and the second component constitute the first direct current voltage.

A voltage value of the third direct current voltage may be equal to a voltage value of the fourth direct current voltage. Specifically, both a second direct current terminal of the unidirectional DC/DC conversion circuit and a second direct current terminal of the bidirectional DC/DC conversion circuit may be connected to a charged device (for example, a power battery). The second direct current terminal of the unidirectional DC/DC conversion circuit outputs the third direct current voltage, and the second direct current terminal of the bidirectional DC/DC conversion circuit outputs the fourth direct current voltage, to supply power to the charged device. An alternating current terminal of the bidirectional AC/DC conversion circuit may be connected to an alternating current power supply or an electrical device. The alternating current power supply is configured to output the first alternating current voltage. A rated voltage of the electrical device may be the second alternating current voltage.

Further, the third direct current voltage and the fourth direct current voltage may have a same positive direction and a same negative direction. Specific meanings are as follows. If both the second direct current terminal of the unidirectional DC/DC conversion circuit and the second direct current terminal of the bidirectional DC/DC conversion circuit are connected in parallel to the charged device (for example, the power battery), a second output terminal that is of the unidirectional DC/DC conversion circuit and that outputs a high level is connected to a positive electrode of the power battery. One of two output terminals of the unidirectional DC/DC conversion circuit that outputs a low level is connected to a negative electrode of the power battery, and a difference between a voltage of the high level and a voltage of the low level is equal to the third direct current voltage. Similarly, one of the two output terminals of the bidirectional DC/DC conversion circuit that outputs a high level is connected to the positive electrode of the power battery, and a second output terminal that is of the bidirectional DC/DC conversion circuit and that outputs a low level is connected to the negative electrode of the power battery, and a difference between a voltage of the high level and a voltage of the low level is equal to the fourth direct current voltage.

When the on-board charging and discharging apparatus provided in the first aspect is used to charge the charged device (for example, the power battery), the bidirectional AC/DC conversion circuit converts the first alternating current voltage output by the alternating current power supply into the first direct current voltage; the unidirectional DC/DC conversion circuit and the bidirectional DC/DC conversion circuit work in parallel, where the unidirectional DC/DC conversion circuit is configured to convert the first component of the first direct current voltage into the third direct current voltage available to the charged device; the bidirectional DC/DC conversion circuit is configured to convert the second component of the first direct current voltage into the fourth direct current voltage available to the charged device. Therefore, when the charged device is charged, all the circuits in the on-board charging and discharging apparatus work, so that high-power charging can be implemented.

When the on-board charging and discharging apparatus is configured to discharge the charged device, because the unidirectional DC/DC conversion circuit can only perform unidirectional DC/DC conversion, the unidirectional DC/DC conversion circuit does not work at this time. In other words, when the charged device is discharged, only some of the circuits in the on-board charging and discharging apparatus work. Therefore, when the charged device is discharged, only some of the circuits in the on-board charging and discharging apparatus (the bidirectional AC/DC conversion circuit and the bidirectional DC/DC conversion circuit) work, so that low-power inversion can be implemented.

In conclusion, high-power charging and low-power inversion can be implemented by using the on-board charging and discharging apparatus provided in this embodiment of this application.

In a possible design, the on-board charging and discharging apparatus provided in the first aspect further includes a controller. The controller is configured to control the bidirectional AC/DC conversion circuit to convert the first alternating current voltage into the first direct current voltage, control the unidirectional DC/DC conversion circuit to convert the first component into the third direct current voltage, and control the bidirectional DC/DC conversion circuit to convert the second component into the fourth direct current voltage.

According to the foregoing solution, under control of the controller, the on-board charging and discharging apparatus is used to charge the charged device.

In addition, the controller may be further configured to control the bidirectional DC/DC conversion circuit to convert the fifth direct current voltage into the second direct current voltage, and control the bidirectional AC/DC conversion circuit to convert the second direct current voltage into the second alternating current voltage.

According to the foregoing solution, under control of the controller, the charged device can supply, by using the on-board charging and discharging apparatus, power to an electrical device that is connected to the alternating current terminal of the bidirectional AC/DC conversion circuit.

In a possible design, the alternating current terminal of the bidirectional AC/DC conversion circuit is a three-phase alternating current terminal. A first alternating current terminal of the three-phase alternating current terminal is connected to a negative bus through a switch unit.

According to the foregoing solution, when the on-board charging and discharging apparatus is configured to charge the charged device by using the alternating current power supply, the bidirectional AC/DC conversion circuit can implement switching between three-phase rectification and single-phase rectification by switching the switch unit. For example, when the switch unit is closed, the bidirectional AC/DC conversion circuit implements single-phase rectification; when the switch unit is open, the bidirectional AC/DC conversion circuit implements three-phase rectification. When the on-board charging and discharging apparatus supplies power to the electrical device by using the charged device, the switch unit may be closed to implement single-phase inversion. A phase wire in which the first alternating current terminal is located may be used as a negative output terminal, and any one of the other two alternating current terminals of the three-phase alternating current terminal is used as a positive output terminal.

In a possible design, the bidirectional AC/DC conversion circuit may include a first single-phase converter, a second single-phase converter, a third single-phase converter, a first bus capacitor, and a second bus capacitor. A positive terminal of the first bus capacitor is connected to a positive bus. A negative terminal of the first bus capacitor is connected to a positive terminal of the second bus capacitor. A negative terminal of the second bus capacitor is connected to the negative bus. An alternating current terminal of the first single-phase converter is the first alternating current terminal. An alternating current terminal of the second single-phase converter is a second alternating current terminal of the three-phase alternating current terminal. An alternating current terminal of the third single-phase converter is a third alternating current terminal of the three-phase alternating current terminal. A direct current terminal of the first single-phase converter, a direct current terminal of the second single-phase converter, and a direct current terminal of the third single-phase converter are all connected to the negative terminal of the first bus capacitor.

In other words, the bidirectional AC/DC conversion circuit may be implemented by using the three single-phase converters that are Y-shaped connected.

Specifically, when the switch unit is open, the first single-phase converter, the second single-phase converter, and the third single-phase converter are configured to implement three-phase AC/DC conversion; when the switch unit is closed, the first single-phase converter and the second single-phase converter are configured to implement single-phase AC/DC conversion or single-phase DC/AC conversion.

According to the foregoing solution, when the switch unit is open, the bidirectional AC/DC conversion circuit works in a three-phase state for three-phase rectification; when the switch unit is closed, the bidirectional AC/DC conversion circuit works in a single-phase state. Because the alternating current terminal of the first single-phase converter is the first alternating current terminal connected to the negative bus through the switch unit, the direct current terminal of the first single-phase converter may be used as a negative output terminal of a single-phase AC/DC conversion circuit. In this case, the direct current terminal of the second single-phase converter may be used as a positive output terminal of the single-phase AC/DC conversion circuit. Alternatively, the alternating current terminal of the first single-phase converter may be used as a negative output terminal of a single-phase DC/AC conversion circuit. In this case, the alternating current terminal of the second single-phase converter may be used as a positive output terminal of the single-phase DC/AC conversion circuit.

Specifically, the first single-phase converter may include: a first inductor, where a first terminal of the first inductor is connected to the first alternating current terminal; a first bidirectional switch, where the first bidirectional switch is bridge-connected between a second terminal of the first inductor and the negative terminal of the first bus capacitor; and a first diode and a first switching transistor, where the first diode is bridge-connected between the positive bus and the second terminal of the first inductor and the first switching transistor is bridge-connected between the negative bus and the second terminal of the first inductor, or the first diode is bridge-connected between the negative bus and the second terminal of the first inductor and the first switching transistor is bridge-connected between the positive bus and the second terminal of the first inductor.

The second single-phase converter may include: a second inductor, where a first terminal of the second inductor is connected to the second alternating current terminal; a second bidirectional switch, where the second bidirectional switch is bridge-connected between a second terminal of the second inductor and the negative terminal of the first bus capacitor; and a second diode and a second switching transistor, where the second diode is bridge-connected between the positive bus and the second terminal of the second inductor and the second switching transistor is bridge-connected between the negative bus and the second terminal of the second inductor, or the second diode is bridge-connected between the negative bus and the second terminal of the second inductor and the second switching transistor is bridge-connected between the positive bus and the second terminal of the second inductor.

The third single-phase converter may include: a third inductor, where a first terminal of the third inductor is connected to the third alternating current terminal; a third bidirectional switch, where the third bidirectional switch is bridge-connected between a second terminal of the third inductor and the negative terminal of the first bus capacitor; and a third diode and a fourth diode, where the third diode is bridge-connected between the positive bus and the second terminal of the third inductor and the fourth diode is bridge-connected between the negative bus and the second terminal of the third inductor.

In other words, the bidirectional AC/DC conversion circuit may be obtained by improving a conventional Vienna circuit by replacing some diodes in the Vienna circuit with switching transistors (the first switching transistor and the second switching transistor). When the on-board charging and discharging apparatus is used for single-phase inversion, the switch unit is closed. In the bidirectional AC/DC conversion circuit, the first switching transistor and the second switching transistor may be used as an upper part or a lower part of an H-bridge inverter, and bidirectional switches may be used as a lower part or an upper part of the H-bridge inverter. In other words, some components in the bidirectional AC/DC conversion circuit are used for inversion, to implement low-power inversion. The first inductor, the second inductor, and the third inductor may be independent inductors, or may be coupled inductors. The first bidirectional switch may include a third switching transistor and a fourth switching transistor that are reversely connected in series. The second bidirectional switch may include a fifth switching transistor and a sixth switching transistor that are reversely connected in series. The third bidirectional switch may include a seventh switching transistor and an eighth switching transistor that are reversely connected in series.

According to the foregoing solution, an inherent anti-parallel diode in a switching transistor may be used to implement a switch feature of a bidirectional switch.

In a possible design, the unidirectional DC/DC conversion circuit may include a first H-bridge rectifier circuit, where the first H-bridge rectifier circuit includes switching transistors, and is configured to adjust the first component; a first isolation transformer, where a primary-side winding of the first isolation transformer is coupled to the first H-bridge rectifier circuit, and a secondary-side winding of the first isolation transformer is coupled to a second H-bridge rectifier circuit, for isolation between the alternating current power supply and the charged device; and the second H-bridge rectifier circuit, where the second H-bridge rectifier circuit includes diodes, and is configured to rectify the adjusted first component, and output the third direct current voltage.

According to the foregoing solution, the unidirectional DC/DC conversion circuit may be implemented by using switching transistors and diodes. In addition, the first isolation transformer may be used to implement isolation between the alternating current power supply and the charged device. When the on-board charging and discharging apparatus is used to discharge the charged device, the unidirectional DC/DC conversion circuit does not work, so that power of the on-board charging and discharging apparatus is reduced during inversion.

In a possible design, the bidirectional DC/DC conversion circuit may include a third H-bridge rectifier circuit, where the third H-bridge rectifier circuit includes switching transistors, and is configured to adjust the input second component; a second isolation transformer, where a primary-side winding of the second isolation transformer is coupled to the third H-bridge rectifier circuit, and a secondary-side winding of the second isolation transformer is coupled to a fourth H-bridge rectifier circuit; and the fourth H-bridge rectifier circuit, where the fourth H-bridge rectifier circuit includes switching transistors, and is configured to rectify the adjusted second component, and output the fourth direct current voltage.

According to the foregoing solution, the bidirectional DC/DC conversion circuit may be implemented by using switching transistors. In addition, the second isolation transformer may be used for isolation between the alternating current power supply and the charged device.

In addition, the fourth H-bridge rectifier circuit may be further configured to adjust the fifth direct current voltage. The third H-bridge rectifier circuit may be further configured to rectify the adjusted fifth direct current voltage, and output the second direct current voltage.

According to a second aspect, an embodiment of this application further provides a charging and discharging system. The charging and discharging system includes an alternating current power supply and the on-board charging and discharging apparatus provided in any one of the first aspect or the possible designs of the first aspect. The alternating current power supply is configured to supply power to the on-board charging and discharging apparatus. In other words, the alternating current power supply may output a first alternating current voltage.

In a possible design, the charging and discharging system further includes a charged device, and the on-board charging and discharging apparatus is configured to charge the charged device.

Specifically, the charged device may be a power battery. For example, the charged device may be a power battery such as a nickel metal hydride battery, a lithium battery, or a lead-acid battery.

In addition, for technical effects implemented in any possible design manner in the second aspect, refer to the technical effects implemented in the different design manners in the first aspect. Details are not described herein again.

### BRIEF DESCRIPTION OF DRAWINGS

FIG. 1 is a schematic structural diagram of an on-board charger in a conventional technology;
FIG. 2 is a schematic structural diagram of a first on-board charging and discharging apparatus according to an embodiment of this application;
FIG. 3 is a schematic structural diagram of a second on-board charging and discharging apparatus according to an embodiment of this application;
FIG. 4 is a schematic structural diagram of a third on-board charging and discharging apparatus according to an embodiment of this application;
FIG. 5 is a schematic structural diagram of a bidirectional AC/DC conversion circuit according to an embodiment of this application;
FIG. 6 is a schematic structural diagram of another bidirectional AC/DC conversion circuit according to an embodiment of this application;
FIG. 7 is a schematic structural diagram of a Vienna circuit according to an embodiment of this application;
FIG. 8 is a schematic structural diagram of a unidirectional DC/DC conversion circuit according to an embodiment of this application;
FIG. 9 is a schematic structural diagram of a bidirectional DC/DC conversion circuit according to an embodiment of this application;
FIG. 10 is a schematic structural diagram of a fourth on-board charging and discharging apparatus according to an embodiment of this application;
FIG. 11 is a schematic structural diagram of a fifth on-board charging and discharging apparatus according to an embodiment of this application;
FIG. 12 is a schematic structural diagram of a sixth on-board charging and discharging apparatus according to an embodiment of this application;
FIG. 13 is a schematic structural diagram of a seventh on-board charging and discharging apparatus according to an embodiment of this application; and
FIG. 14 is a schematic structural diagram of a charging and discharging system according to an embodiment of this application.

### DESCRIPTION OF EMBODIMENTS

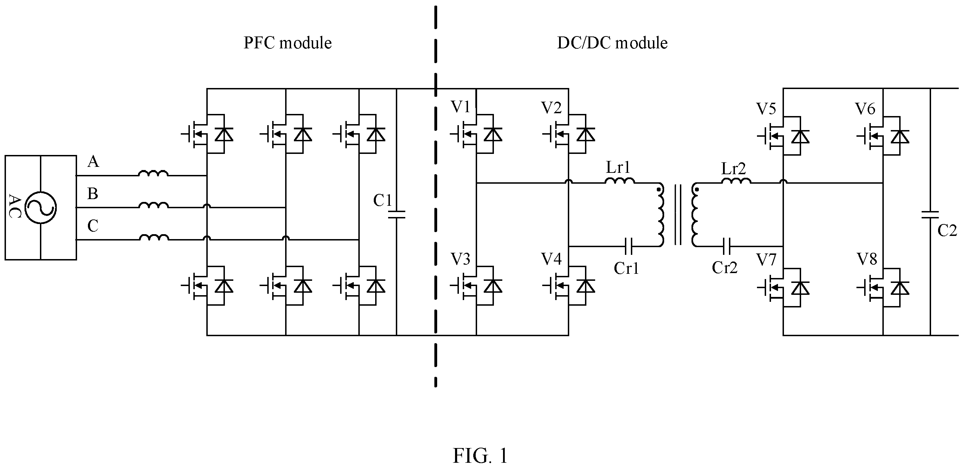

In a conventional technology, a possible structure of an OBC may be shown in FIG. 1. The OBC shown in FIG. 1 includes two parts: a three-phase power factor correction (power factor correction, PFC) module on the left side of dashed lines, and a direct current/direct current (DC/DC) module on the right side of the dashed lines. Specifically, when the OBC works in a rectification state to charge a power battery, an alternating current is input from the left side of the PFC module, the PFC module is used for power factor correction, the DC/DC module is used for rectification, and direct currents are output from two terminals of a capacitor C2, to charge the power battery; when the OBC works in an inversion state to discharge the power battery, the power battery inputs direct currents to the two terminals of C2, the DC/DC module is used for rectification, the three-phase PFC/inverter module is used for inversion, and an alternating current is output from the left side of the PFC module.

Although the OBC shown in FIG. 1 can implement bidirectional energy conversion, an inversion power class of the OBC is equivalent to a rectifier power class of the OBC. The rectification power class of the OBC is generally high, to implement fast charging. Therefore, the inversion power class of the OBC shown in FIG. 1 is also high. Generally (especially when low-power inversion is required), a requirement of an inversion power of the OBC is low, and a high inversion power causes redundancy of an output power capability of a power transistor.

Therefore, the OBC in the conventional technology has problems that the inversion power is excessively high and the output capability of the power transistor is redundant.

To make the objectives, technical solutions, and advantages of this application clearer, the following further describes this application in detail with reference to the accompanying drawings.

Embodiments of this application provide an on-board charging and discharging apparatus and a system, to implement high-power charging and reduce inversion power.

It should be noted that "a plurality of' in this application refers to two or more. In addition, it should be understood that in the description of this application, terms such as "first" and "second" are merely used for distinguishing and description, but should not be understood as indicating or implying relative importance, or should not be understood as indicating or implying a sequence.

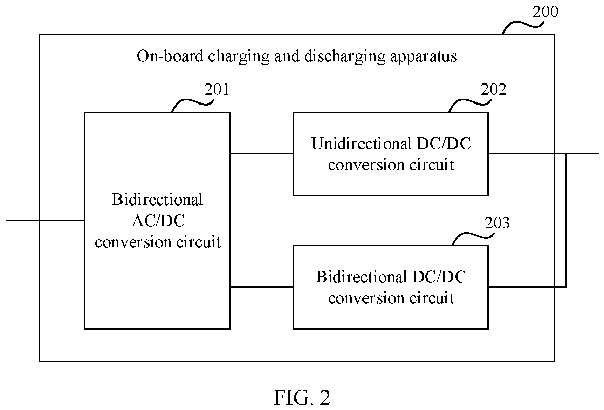

FIG. 2 is a schematic structural diagram of an on-board charging and discharging apparatus according to an embodiment of this application. The on-board charging and discharging apparatus 200 includes a bidirectional alternating current (alternating current, AC)/direct current (direct current, DC) conversion circuit 201 (bidirectional AC/DC conversion circuit 201), a unidirectional direct current/direct current conversion circuit 202 (unidirectional DC/DC conversion circuit 202), and a bidirectional direct current/direct current conversion circuit 203 (bidirectional DC/DC conversion circuit 203). A direct current terminal of the bidirectional AC/DC conversion circuit 201 is electrically connected to a first direct current terminal of the unidirectional DC/DC conversion circuit 202 and a first direct current terminal of the bidirectional DC/DC conversion circuit 203. A second direct current terminal of the unidirectional DC/DC conversion circuit 202 is electrically connected to a second direct current terminal of the bidirectional DC/DC conversion circuit 203.

The bidirectional AC/DC conversion circuit 201 may be configured to convert an alternating current voltage into a direct current voltage, or may be configured to convert a direct current voltage into an alternating current voltage. The unidirectional DC/DC conversion circuit 202 may be used for unidirectional conversion between a direct current voltage and a direct current voltage. The bidirectional DC/DC conversion circuit 203 may be used for bidirectional conversion between a direct current voltage and a direct current voltage.

The bidirectional AC/DC conversion circuit 201 is configured to convert a received first alternating current voltage into a first direct current voltage, or convert a second direct current voltage output by the bidirectional DC/DC conversion circuit 203 into a second alternating current voltage.

The unidirectional DC/DC conversion circuit 202 is configured to convert a first component of the first direct current voltage into a third direct current voltage.

The bidirectional DC/DC conversion circuit 203 is configured to convert a second component of the first direct current voltage into a fourth direct current voltage, or convert a received fifth direct current voltage into the second direct current voltage. The first component and the second component constitute the first direct current voltage.

A voltage value of the third direct current voltage may be equal to a voltage value of the fourth direct current voltage. In this case, the second direct current terminal (outputting the third direct current voltage) of the unidirectional DC/DC conversion circuit 202 may be electrically connected to a charged device (for example, a power battery). The second direct current terminal (outputting the fourth direct current voltage) of the bidirectional DC/DC conversion circuit 203 may also be electrically connected to the charged device. In other words, the unidirectional DC/DC conversion circuit 202 and the bidirectional DC/DC conversion circuit 203 respectively rectify the first component and the second component of the first direct current voltage, and the unidirectional DC/DC conversion circuit 202 and the bidirectional DC/DC conversion circuit 203 are connected to the charged device in parallel, to charge the charged device.

Further, the third direct current voltage and the fourth direct current voltage may have a same positive direction and a same negative direction. Specific meanings are as follows. If both the second direct current terminal of the unidirectional DC/DC conversion circuit and the second direct current terminal of the bidirectional DC/DC conversion circuit are connected in parallel to the charged device (for example, the power battery), a second output terminal that is of the unidirectional DC/DC conversion circuit and that outputs a high level is connected to a positive electrode of the power battery. One of two output terminals of the unidirectional DC/DC conversion circuit that outputs a low level is connected to a negative electrode of the power battery, and a difference between a voltage of the high level and a voltage of the low level is equal to the third direct current voltage. Similarly, one of the two output terminals of the bidirectional DC/DC conversion circuit that outputs a high level is connected to the positive electrode of the power battery, and a second output terminal that is of the bidirectional DC/DC conversion circuit and that outputs a low level is connected to the negative electrode of the power battery, and a difference between a voltage of the high level and a voltage of the low level is equal to the fourth direct current voltage.

In addition, in this embodiment of this application, an alternating current terminal of the bidirectional AC/DC conversion circuit 201 may be electrically connected to an alternating current power supply or an electrical device. The alternating current power supply is configured to output the first alternating current voltage. A rated voltage of the electrical device may be the second alternating current voltage. The electrical device may be a terminal such as an induction cooker, a rice cooker, a mobile phone, a navigation device, a television, or a laptop computer.

When the on-board charging and discharging apparatus 200 is used to charge the charged device, the bidirectional AC/DC conversion circuit 201 converts the first alternating current voltage output by the alternating current power supply into the first direct current voltage. The unidirectional DC/DC conversion circuit 202 and the bidirectional DC/DC conversion circuit 203 work in parallel. The unidirectional DC/DC conversion circuit 202 is configured to convert the first component of the first direct current voltage into the third direct current voltage available to the charged device. The bidirectional DC/DC conversion circuit 203 is configured to convert the second component of the first direct current voltage into the fourth direct current voltage available to the charged device. Both the second direct current terminal of the unidirectional DC/DC conversion circuit 202 and the second direct current terminal of the bidirectional DC/DC conversion circuit 203 are connected to the charged device. The first component of the first direct current voltage and the second component of the first direct current voltage constitute the first direct current voltage. For example, the first direct current voltage is 310 V, the first component of the first direct current voltage may be 155 V, and the second component of the first direct current voltage may be 155 V.

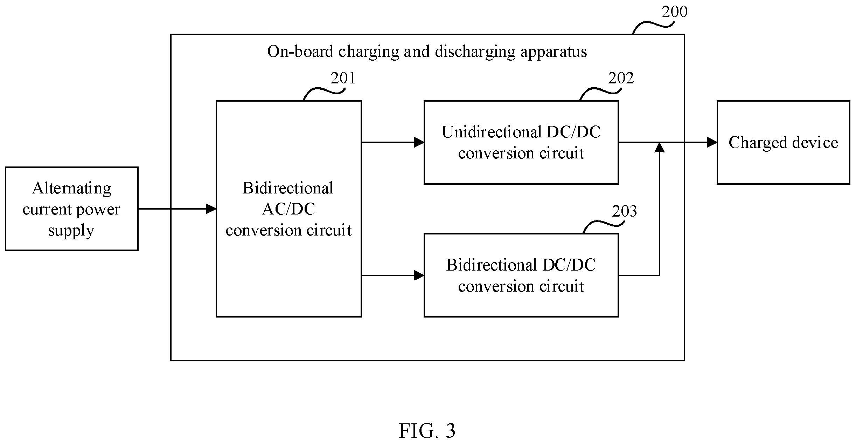

Specifically, when the charged device is charged, an equivalent circuit of the on-board charging and discharging apparatus 200 may be shown in FIG. 3. In this case, the alternating current terminal of the bidirectional AC/DC conversion circuit 201 is used as an input terminal of the on-board charging and discharging apparatus 200, and the second direct current terminal of the unidirectional DC/DC conversion circuit 202 and the second direct current terminal of the bidirectional DC/DC conversion circuit 203 are connected in parallel as an output terminal of the on-board charging and discharging apparatus 200. In specific implementation, the charged device may be a power battery, and the power battery may be charged by the alternating current power supply by using the on-board charging and discharging apparatus 200 shown in FIG. 3.

It should be understood that the first direct current voltage obtained by rectifying the first alternating current voltage by the bidirectional AC/DC conversion circuit 201 fluctuates greatly, and a voltage value of the first direct current voltage cannot meet a voltage requirement of the charged device. Therefore, the unidirectional DC/DC conversion circuit 202 and the bidirectional AC/DC conversion circuit 201 further need to perform rectification and voltage adjustment processing on the first direct current voltage, to output the third direct current voltage and the fourth direct current voltage that are available to the charged device.

When the on-board charging and discharging apparatus 200 is used to discharge the charged device, because the unidirectional DC/DC conversion circuit 202 can only perform unidirectional DC/DC conversion, the unidirectional DC/DC conversion circuit 202 does not work at this time. In other words, when the charged device is discharged, only some of the circuits in the on-board charging and discharging apparatus 200 work. Specifically, the bidirectional DC/DC conversion circuit 203 is configured to convert the fifth direct current voltage output by the charged device into the second direct current voltage, and the bidirectional AC/DC conversion circuit 201 is configured to convert the second direct current voltage output by the bidirectional DC/DC conversion circuit 203 into the second alternating current voltage available to the electrical device.

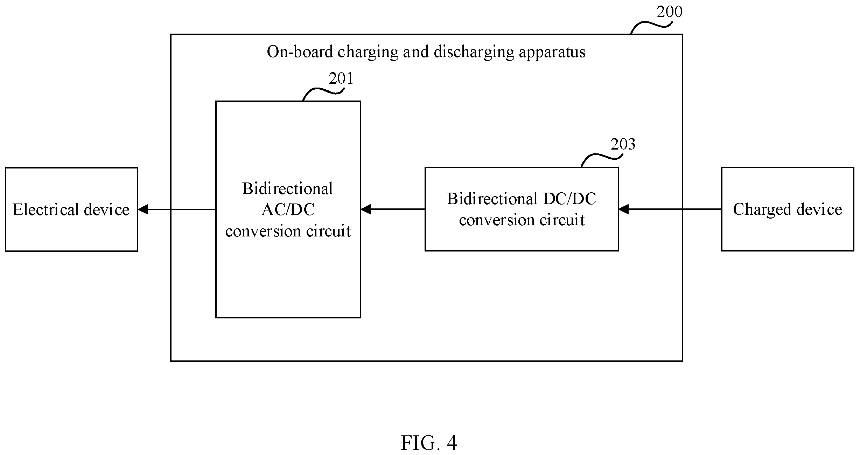

Specifically, when the charged device is discharged, an equivalent circuit of the on-board charging and discharging apparatus 200 may be shown in FIG. 4. In this case, the second direct current terminal of the bidirectional DC/DC conversion circuit 203 is used as an input terminal of the on-board charging and discharging apparatus 200, and the alternating current terminal of the bidirectional AC/DC conversion circuit 201 is used as an output terminal of the on-board charging and discharging apparatus 200.

In a specific implementation, the electrical device may be an on-board electrical device, or may be another power battery. The on-board charging and discharging apparatus 200 shown in FIG. 4 may supply power to the on-board electrical device (V2L) by using a power battery or charge the another power battery (V2V).

For example, the electrical device may be an on-board electrical device such as an induction cooker or a rice cooker, and the charged device may be a power battery. In this case, when the power battery is discharged, a direct current of 90 V to 400 V may be output. The direct current output by the power battery is output to the bidirectional AC/DC conversion circuit 201 after voltage adjustment processing is performed on the direct current output by the power battery by the bidirectional DC/DC conversion circuit 203. The bidirectional AC/DC conversion circuit 201 performs DC/AC conversion on the direct current output by the bidirectional DC/DC conversion circuit 203, and outputs an alternating current of 220 V to be used by a device such as the induction cooker or the rice cooker. After voltage adjustment processing is performed on the direct current output by the power battery by the bidirectional DC/DC conversion circuit 203, the alternating current output by the bidirectional AC/DC conversion circuit 201 can meet a requirement for a rated voltage of the device such as the induction cooker or the rice cooker.

For example, the electrical device and the charged device may be power batteries in two new energy vehicles respectively, where an electric capacity of the charged device is greater than an electric capacity of the electrical device. In this case, the charged device may charge the electrical device by using the on-board charging and discharging apparatus 200. Specifically, when discharging, the charged device may output a direct current of 90 V to 400 V, the bidirectional DC/DC conversion circuit 203 performs voltage adjustment processing on the direct current output by the charged device and outputs direct current to the bidirectional AC/DC conversion circuit 201; and the bidirectional AC/DC conversion circuit 201 performs DC/AC conversion on the direct current output by the bidirectional DC/DC conversion circuit 203, and outputs an alternating current, to charge the power battery of the other new energy vehicle.

It should be understood that, if the bidirectional AC/DC conversion circuit 201 directly performs inversion on the fifth direct current voltage output by the charged device, an output voltage may hardly meet a voltage requirement of the electrical device. Therefore, the bidirectional DC/DC conversion circuit 203 may first rectify and adjust the fifth direct current voltage and output the second direct current voltage, and then the bidirectional AC/DC conversion circuit 201 performs inversion processing on the second direct current voltage, to output the second alternating current voltage available to the electrical device.

For ease of description, in this embodiment of this application, a charging process of the on-board charging and discharging apparatus 200 is referred to as "forward charging". A discharging process of the on-board charging and discharging apparatus 200 is referred to as "reverse discharging".

In actual application, the on-board charging and discharging apparatus 200 may be fixed to a new energy vehicle. An electrical device may be connected to the on-board charging and discharging apparatus 200 through a fixed interface on the new energy vehicle. For example, a power plug of a device such as an induction cooker or a rice cooker may be directly plugged into the fixed interface, so that a power battery supplies power to the induction cooker or the rice cooker. In another implementation, the on-board charging and discharging apparatus 200 may be flexibly disposed and removable. In other words, a fixed interface is disposed on a new energy vehicle, to connect the on-board charging and discharging apparatus 200 and a charged device. In this case, the on-board charging and discharging apparatus 200 may be considered as an apparatus independent of the new energy vehicle.

In a specific implementation, the bidirectional AC/DC conversion circuit 201, the unidirectional DC/DC conversion circuit 202, and the bidirectional DC/DC conversion circuit 203 may include components such as switching transistors, diodes, inductors, and capacitors. Working statuses of the bidirectional AC/DC conversion circuit 201, the unidirectional DC/DC conversion circuit 202, and the bidirectional DC/DC conversion circuit 203 may be implemented by adjusting working statuses of these components (for example, the switching transistors).

In this application, a controller may be used to adjust the foregoing working statuses. To be specific, the on-board charging and discharging apparatus 200 may further include the controller. The controller is configured to control the bidirectional AC/DC conversion circuit to convert the first alternating current voltage into the first direct current voltage, control the unidirectional DC/DC conversion circuit 202 to convert the first component into the third direct current voltage, and control the bidirectional DC/DC conversion circuit 203 to convert the second component into the fourth direct current voltage. In this case, the on-board charging and discharging apparatus 200 performs "forward charging".

In addition, the controller may be further configured to control the bidirectional DC/DC conversion circuit 203 to convert the fifth direct current voltage into the second direct current voltage, and control the bidirectional AC/DC conversion circuit 201 to convert the second direct current voltage into the second alternating current voltage. In this case, the on-board charging and discharging apparatus 200 performs "reverse discharging".

Specifically, if a switching transistor in each circuit of the on-board charging and discharging apparatus 200 is a metal oxide semiconductor (metal oxide semiconductor, MOS) transistor, the controller may be connected to a gate electrode of the MOS transistor, and the controller controls the MOS transistor to be on or off, to enable the on-board charging and discharging apparatus 200 to implement rectification or inversion. If the switching transistor in each circuit of the on-board charging and discharging apparatus 200 is a bipolar junction transistor (bipolar junction transistor, BJT), the controller may be connected to a base electrode of the BJT, and the controller controls the BJT to be on or off, to enable the on-board charging and discharging apparatus 200 to implement rectification or inversion.

In specific implementation, the controller may be any one of a micro control unit (micro controller unit, MCU), a central processing unit (central processing unit, CPU), or a digital signal processor (digital signal processor, DSP). Certainly, a specific form of the controller is not limited to the foregoing examples.

The following describes specific structures of the bidirectional AC/DC conversion circuit 201, the unidirectional DC/DC conversion circuit 202, and the bidirectional DC/DC conversion circuit 203 in the on-board charging and discharging apparatus 200.

### 1. Bidirectional AC/DC conversion circuit 201

An alternating current terminal of the bidirectional AC/DC conversion circuit 201 may be a three-phase alternating current terminal. A first alternating current terminal of the three-phase alternating current terminal is connected to a negative bus (N) through a switch unit.

A function of disposing the switch unit is as follows: When the on-board charging and discharging apparatus 200 is configured to perform "forward charging", the bidirectional AC/DC conversion circuit 201 can implement switching between three-phase rectification and single-phase rectification by switching the switch unit. For example, when the switch unit is closed, the bidirectional AC/DC conversion circuit 201 implements single-phase rectification; when the switch unit is open, the bidirectional AC/DC conversion circuit 201 implements three-phase rectification. When the on-board charging and discharging apparatus 200 is configured to perform "reverse discharging", the switch unit may be closed to implement single-phase inversion. A phase wire in which the first alternating current terminal is located may be used as a negative output terminal, and any one of the other two alternating current terminals of the three-phase alternating current terminal is used as a positive output terminal.

In actual application, the foregoing described controller may be used to control the switch unit to be on or off.

Specifically, the bidirectional AC/DC conversion circuit 201 includes a first single-phase converter, a second single-phase converter, a third single-phase converter, a first bus capacitor, and a second bus capacitor. A positive terminal of the first bus capacitor is connected to a positive bus (P). A negative terminal of the first bus capacitor is connected to a positive terminal of the second bus capacitor. A negative terminal of the second bus capacitor is connected to the negative bus (N). An alternating current terminal of the first single-phase converter is the first alternating current terminal. An alternating current terminal of the second single-phase converter is a second alternating current terminal of the three-phase alternating current terminal. An alternating current terminal of the third single-phase converter is a third alternating current terminal of the three-phase alternating current terminal. A direct current terminal of the first single-phase converter, a direct current terminal of the second single-phase converter, and a direct current terminal of the third single-phase converter are all connected to the negative terminal of the first bus capacitor.

It is clearly that the bidirectional AC/DC conversion circuit 201 may be implemented by the three single-phase converters that are Y-shaped connected. When the switch unit is open, the first single-phase converter, the second single-phase converter, and the third single-phase converter are configured to implement three-phase AC/DC conversion. When the switch unit is closed, the first single-phase converter and the second single-phase converter are configured to implement single-phase AC/DC conversion or single-phase DC/AC conversion.

In other words, when the switch unit is open, the bidirectional AC/DC conversion circuit 201 works in a three-phase state for three-phase rectification; when the switch unit is closed, the bidirectional AC/DC conversion circuit 201 works in a single-phase state. The direct current terminal of the first single-phase converter may be used as a negative output terminal of a single-phase conversion AC/DC circuit. In this case, the direct current terminal of the second single-phase converter may be used as a positive output terminal of the single-phase AC/DC conversion circuit. Alternatively, the alternating current terminal of the first single-phase converter may be used as a negative output terminal of a single-phase DC/AC conversion circuit. In this case, the alternating current terminal of the second single-phase converter may be used as a positive output terminal of the single-phase DC/AC conversion circuit.

In an implementation, in the bidirectional AC/DC conversion circuit 201, the first bus capacitor may be connected to the unidirectional DC/DC conversion circuit 202, and the second bus capacitor is connected to the bidirectional DC/DC conversion circuit 203. In this case, when the on-board charging and discharging apparatus 200 performs forward charging, the first bus capacitor provides the first component of the first direct current voltage for the unidirectional DC/DC conversion circuit 202, and the second bus capacitor provides the second component of the first direct current voltage for the bidirectional DC/DC conversion circuit 203. When the on-board charging and discharging apparatus 200 performs reverse discharging, a voltage on the second bus capacitor connected to the bidirectional DC/DC conversion circuit 203 is the second direct current voltage.

In another implementation, in the bidirectional AC/DC conversion circuit 201, the first bus capacitor may be connected to the bidirectional DC/DC conversion circuit 203, and the second bus capacitor is connected to the unidirectional DC/DC conversion circuit 202. In this case, when the on-board charging and discharging apparatus 200 performs forward charging, the second bus capacitor provides the first component of the first direct current voltage for the unidirectional DC/DC conversion circuit 202, and the first bus capacitor provides the second component of the first direct current voltage for the bidirectional DC/DC conversion circuit 203. When the on-board charging and discharging apparatus 200 performs reverse discharging, a voltage on the first bus capacitor connected to the bidirectional DC/DC conversion circuit 203 is the second direct current voltage.

The following provides a specific structure of a single-phase converter.

Specifically, the first single-phase converter includes: a first inductor, where a first terminal of the first inductor is connected to the first alternating current terminal; a first bidirectional switch, where the first bidirectional switch is bridge-connected between a second terminal of the first inductor and the negative terminal of the first bus capacitor; and a first diode and a first switching transistor, where the first diode is bridge-connected between the positive bus (P) and the second terminal of the first inductor, and the first switching transistor is bridge-connected between the negative bus (N) and the second terminal of the first inductor, or the first diode is bridge-connected between the negative bus (N) and the second terminal of the first inductor, and the first switching transistor is bridge-connected between the positive bus (P) and the second terminal of the first inductor.

The second single-phase converter includes: a second inductor, where a first terminal of the second inductor is connected to the second alternating current terminal; a second bidirectional switch, where the second bidirectional switch is bridge-connected between a second terminal of the second inductor and the negative terminal of the first bus capacitor; and a second diode and a second switching transistor, where the second diode is bridge-connected between the positive bus (P) and the second terminal of the second inductor, and the second switching transistor is bridge-connected between the negative bus (N) and the second terminal of the second inductor, or the second diode is bridge-connected between the negative bus (N) and the second terminal of the second inductor, and the second switching transistor is bridge-connected between the positive bus (P) and the second terminal of the second inductor.

The third single-phase converter includes: a third inductor, where a first terminal of the third inductor is connected to the third alternating current terminal; a third bidirectional switch, where the third bidirectional switch is bridge-connected between a second terminal of the third inductor and the negative terminal of the first bus capacitor; and a third diode and a fourth diode, where the third diode is bridge-connected between the positive bus (P) and the second terminal of the third inductor, and the fourth diode is bridge-connected between the negative bus (N) and the second terminal of the third inductor.

The first bidirectional switch includes a third switching transistor and a fourth switching transistor that are reversely connected in series. The second bidirectional switch includes a fifth switching transistor and a sixth switching transistor that are reversely connected in series. The third bidirectional switch includes a seventh switching transistor and an eighth switching transistor that are reversely connected in series. In other words, the bidirectional switch in this embodiment of this application includes two switching transistors that are reversely connected in series, so that a switching feature of the bidirectional switch is implemented by using an inherent anti-parallel diode in the switching transistor.

It should be understood that, in the first single-phase converter, the first inductor may be an independent inductor, or may be a coupled inductor. Similarly, in the second single-phase converter, the second inductor may be an independent inductor, or may be a coupled inductor. In the third single-phase converter, the third inductor may be an independent inductor, or may be a coupled inductor.

For ease of understanding, the following provides two specific examples of the bidirectional AC/DC conversion circuit 201.

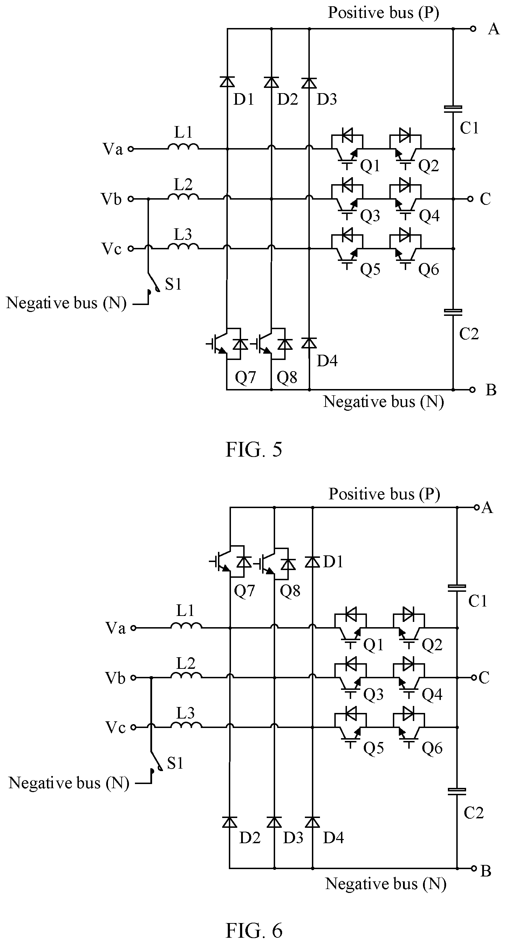

FIG. 5 is a schematic structural diagram of a bidirectional AC/DC conversion circuit 201 according to an embodiment of this application. In FIG. 5, L2 may be considered as the first inductor; D2 may be considered as the first diode; Q8 may be considered as the first switching transistor; Q3 and Q4 constitute the first bidirectional switch; Q3 may be considered as the third switching transistor; Q4 may be considered as the fourth switching transistor; L2, D2, Q8, Q3, and Q4 constitute the first single-phase converter. Similarly, L1 may be considered as the second inductor; D1 may be considered as the second diode; Q7 may be considered as the second switching transistor; Q1 and Q2 constitute the second bidirectional switch; Q1 may be considered as the fifth switching transistor; Q2 may be considered as the sixth switching transistor; L1, D1, Q7, Q1, and Q2 constitute the second single-phase converter. L3 may be considered as the third inductor; D3 may be considered as the third diode; D4 may be considered as the fourth diode; Q5 and Q6 constitute the third bidirectional switch; Q5 may be considered as the seventh switching transistor; Q6 may be considered as the eighth switching transistor; L3, D3, D4, Q5, and Q6 constitute the third single-phase converter. In addition, S1 may be considered as the switch unit; C1 may be considered as the first bus capacitor; C2 may be considered as the second bus capacitor; Vb may be considered as the first alternating current terminal; Va may be considered as the second alternating current terminal; Vc may be considered as the third alternating current terminal.

A connection relationship between the components in the bidirectional AC/DC conversion circuit 201 shown in FIG. 5 may be as follows: An anode of the diode D1 is connected to a drain of the MOS transistor Q7; an anode of the diode D2 is connected to a drain of the MOS transistor Q8; an anode of the diode D3 is connected to a cathode of the diode D4; cathodes of D1, D2, and D3 are connected; a source of Q7, a source of Q8, and an anode of D4 are connected.

When the bidirectional AC/DC conversion circuit 201 shown in FIG. 5 is used to implement three-phase rectification, S1 is open; Va, Vb, and Vc are used as three-phase input terminals; A and B are used as direct current output terminals; energy is transmitted from left to right; three-phase alternating current input from the left side is converted into a direct current for output. When the bidirectional AC/DC conversion circuit 201 shown in FIG. 5 is used to implement single-phase rectification, S1 is closed; Va and Vb are used as alternating current input terminals; A and B are used as direct current output terminals; energy is transmitted from left to right; a single-phase alternating current input from the left side is converted into a direct current for output. When the bidirectional AC/DC conversion circuit 201 shown in FIG. 5 is used to implement single-phase inversion, S1 is closed; B and C are used as direct current input terminals, and are configured to receive direct currents output by the bidirectional DC/DC conversion circuit 203; Va and Vb are used as alternating current output terminals; energy is transmitted from right to left; a direct current input from the right side is converted into a single-phase alternating current to be output through Va and Vb.

FIG. 6 is a schematic structural diagram of another bidirectional AC/DC conversion circuit 201 according to an embodiment of this application. In FIG. 6, L2, D3, Q8, Q3, and Q4 constitute the first single-phase converter. L1, D2, Q7, Q1, and Q2 constitute the second single-phase converter. L3, D1, D4, Q5, and Q6 constitute the third single-phase converter. A connection relationship between the components may be shown in FIG. 6. The bidirectional AC/DC conversion circuit shown in FIG. 6 may be obtained by modifying the bidirectional AC/DC conversion circuit 201 shown in FIG. 5. Specifically, the bidirectional AC/DC conversion circuit 201 shown in FIG. 6 may be obtained by exchanging positions of the two switching transistors Q7 and Q8 in the bidirectional AC/DC conversion circuit 201 shown in FIG. 5 with positions of diodes connected to the switching transistors Q7 and Q8.

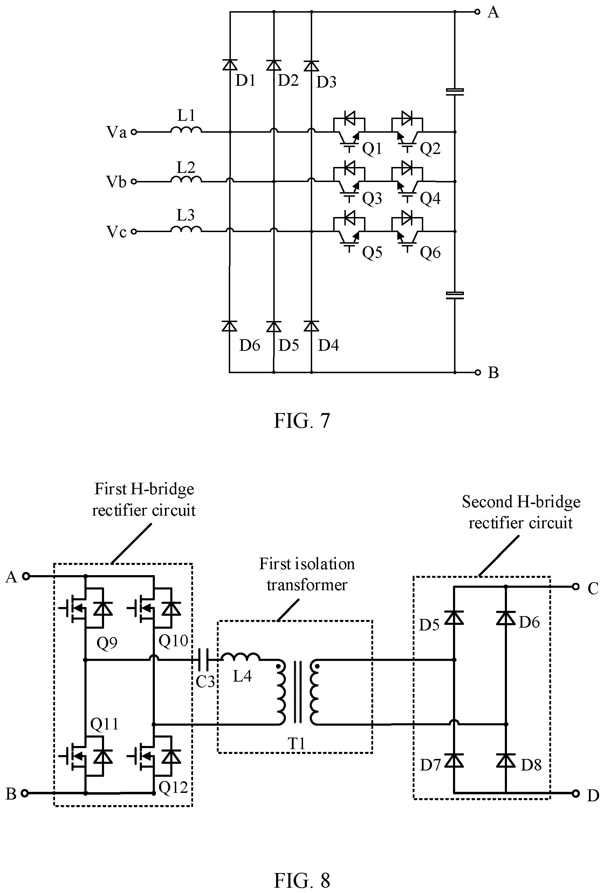

It should be understood that, as shown in FIG. 5 and FIG. 6, the bidirectional AC/DC conversion circuit 201 in the embodiments of this application may be improvement of a conventional Vienna (Vienna) circuit. FIG. 7 is a schematic structural diagram of the conventional Vienna circuit. Va, Vb, and Vc are used as three-phase input terminals; and A and B are used as direct current output terminals. This can implement a PFC function while implementing rectification. It can be learned that, disposing of inductors and bidirectional switches in the Vienna circuit is the same as disposing of the inductors and the bidirectional switches in the bidirectional AC/DC conversion circuit 201. However, for the remaining part, the Vienna circuit includes six diodes, while the bidirectional AC/DC conversion circuit 201 includes two switching transistors and four diodes. In other words, the bidirectional AC/DC conversion circuit 201 in this embodiment of this application may be implemented by replacing some diodes in the Vienna circuit with switching transistors.

The conventional Vienna circuit is configured to implement rectification, but cannot implement inversion. Based on the foregoing improvement of the Vienna circuit, an inverter function can be implemented by adding a smaller quantity of (two) switching transistors. Compared with the conventional technology in which inversion is implemented by using a full-bridge structure, this solution can reduce a quantity of switching transistors in the on-board charging and discharging apparatus 200, and further reduce design costs.

In addition, by using the foregoing structure, the bidirectional AC/DC conversion circuit 201 can further obtain a high power factor and a low current harmonic by controlling the bidirectional switch in the bidirectional AC/DC conversion circuit 201 to be on or off, in addition to implementing AC/DC conversion and DC/AC conversion. Therefore, the bidirectional AC/DC conversion circuit 201 may also be considered as a power factor correction (power factor correction, PFC) module.

It should be noted that the switching transistor in this embodiment of this application includes but is not limited to a complementary metal oxide semiconductor (complementary metal oxide semiconductor, CMOS) transistor, a MOS transistor, a BJT, and a silicon carbide (SiC) power transistor. A specific type of the switching transistor is not limited in this embodiment of this application. In the examples of the accompanying drawings of this application, an example in which a switching transistor is a MOS transistor is used for description. In actual application, a switching transistor of another type may be used. When a switching transistor of another type is used, names of ports on the switching transistor are different, but functions are basically the same. For example, when the switching transistor is a BJT, a base electrode of the BJT is equivalent to a gate electrode of a MOS transistor, a collector electrode of the BJT is equivalent to a drain electrode of the MOS transistor, and an emitter electrode of the BJT is equivalent to a source electrode of the MOS transistor. Therefore, the on-board charging and discharging apparatus implemented based on MOS transistors in this application may be equivalent to an on-board charging and discharging apparatus implemented based on BJTs.

An implementation and a principle when a switching transistor of another type is used are respectively similar to an implementation and a principle when a MOS process is used. Therefore, in this embodiment of this application, an example in which a switching transistor is a MOS transistor is used, and a specific implementation when a switching transistor of another type is used is not described in detail.

Certainly, the foregoing description of the structure of the bidirectional AC/DC conversion circuit 201 is merely an example. In actual application, the bidirectional AC/DC conversion circuit 201 may alternatively use another structure. For example, the bidirectional AC/DC conversion circuit 201 may be a three-phase fully controlled bridge circuit, and is configured to implement three-phase rectification and three-phase inversion.

### 2. Unidirectional DC/DC conversion circuit 202

The unidirectional DC/DC conversion circuit 202 may include a first H-bridge rectifier circuit, where the first H-bridge rectifier circuit includes switching transistors, and is configured to adjust the first component; a first isolation transformer, where a primary-side winding of the first isolation transformer is coupled to the first H-bridge rectifier circuit, and a secondary-side winding of the first isolation transformer is coupled to a second H-bridge rectifier circuit; and the second H-bridge rectifier circuit, where the second H-bridge rectifier circuit includes diodes, and is configured to rectify the adjusted first component, and output the third direct current voltage.

In this embodiment of this application, the unidirectional DC/DC conversion circuit 202 may use an existing structure, that is, includes two H-bridge rectifier circuits and one isolation transformer. An input terminal of the first H-bridge rectifier circuit may be connected to the two terminals of the first bus capacitor in the bidirectional AC/DC conversion circuit 201 (in this case, a voltage between the two terminals of the first bus capacitor is the first component of the first direct current voltage) and may also be connected to the two terminals of the second bus capacitor in the bidirectional AC/DC conversion circuit 201 (in this case, a voltage between the two terminals of the second bus capacitor is the first component of the first direct current voltage).

The unidirectional DC/DC conversion circuit can perform voltage adjustment and rectification processing on the first component of the first direct current voltage, and also can implement isolation between an alternating current power supply and a charged device.

For example, a structure of the unidirectional DC/DC conversion circuit 202 may be shown in FIG. 8. In FIG. 8, A and B are used as direct current input terminals; C and D are used as direct current output terminals; MOS transistors Q9, Q10, Q11, and Q12 constitute the first H-bridge rectifier circuit; diodes D5, D6, D7, and D8 constitute the second H-bridge rectifier circuit; L4 and T1 constitute the first isolation transformer. L4 and T1 each may be a discrete structure, or L4 and T1 may be magnetically integrated.

### 3. Bidirectional DC/DC conversion circuit 203

The bidirectional DC/DC conversion circuit 203 may include a third H-bridge rectifier circuit, where the third H-bridge rectifier circuit includes switching transistors, and is configured to adjust the input second component; a second isolation transformer, where a primary-side winding of the second isolation transformer is coupled to the third H-bridge rectifier circuit, and a secondary-side winding of the second isolation transformer is coupled to a fourth H-bridge rectifier circuit; and the fourth H-bridge rectifier circuit, where the fourth H-bridge rectifier circuit includes switching transistors, and is configured to rectify the adjusted second component, and output the fourth direct current voltage.

The bidirectional AC/DC conversion circuit 201 can implement bidirectional DC/DC conversion. When the on-board charging and discharging apparatus 200 performs "forward charging", the third H-bridge rectifier circuit is configured to adjust the input second component, and the fourth H-bridge rectifier circuit is configured to rectify the adjusted second component, and output the fourth direct current voltage. In addition, when the on-board charging and discharging apparatus 200 performs "reverse charging", the fourth H-bridge rectifier circuit is further configured to adjust the fifth direct current voltage, and the third H-bridge rectifier circuit is further configured to rectify the adjusted fifth direct current voltage, and output the second direct current voltage.

In this embodiment of this application, the bidirectional AC/DC conversion circuit 201 may include two H-bridge rectifier circuits and one isolation transformer. Differences between the bidirectional AC/DC conversion circuit 201 and the unidirectional DC/DC conversion circuit 202 are as follows: The second H-bridge rectifier circuit in the unidirectional DC/DC conversion circuit 202 is constitute by diodes, and the second H-bridge rectifier circuit can only implement unidirectional transmission of energy (from left to right); the fourth H-bridge rectifier circuit in the bidirectional AC/DC conversion circuit 201 is constitute by switching transistors, and can implement bidirectional energy transmission.

During forward charging, the foregoing bidirectional DC/DC conversion circuit performs voltage adjustment and rectification processing on the second component of the first direct current voltage, and may further implement isolation between an alternating current power supply and a charged device. During reverse discharging, the foregoing bidirectional DC/DC conversion circuit may perform voltage adjustment and rectification processing on the fifth direct current voltage output by the charged device.

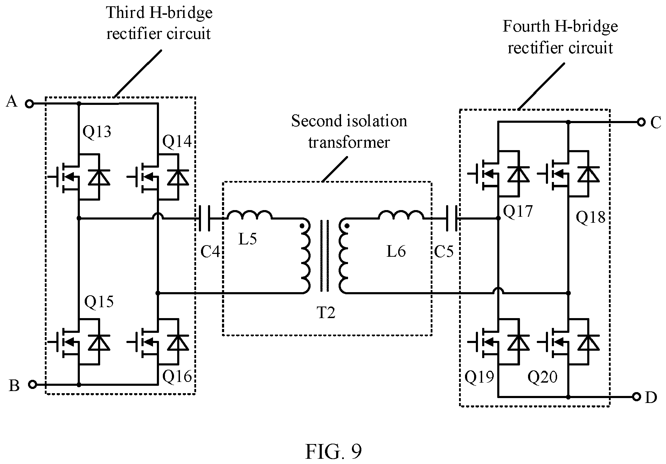

For example, the bidirectional DC/DC conversion circuit 203 may be shown in FIG. 9. In FIG. 9, MOS transistors Q13, Q14, Q15, and Q16 constitute the third H-bridge rectifier circuit; MOS transistors Q17, Q18, Q19, and Q20 constitute the fourth H-bridge rectifier circuit; L5, L6, and T2 constitute the second isolation transformer. L5, L6, and T2 each may be a discrete structure, or L5, L6, and T2 may be magnetically integrated. When the on-board charging and discharging apparatus 200 performs forward charging, A and B are used as direct current input terminals, and are configured to receive output of the bidirectional AC/DC conversion circuit 201; C and D are used as direct current output terminals, and are connected to the charged device. When the on-board charging and discharging apparatus 200 performs reverse discharging, C and D are used as direct current input terminals, and are configured to receive a direct current output by the charged device; A and B are used as the direct current output terminals, and are configured to output a direct current to the bidirectional AC/DC conversion circuit 201.

In a forward charging scenario, in the unidirectional DC/DC conversion circuit shown in FIG. 8 and the bidirectional DC/DC conversion circuit shown in FIG. 9, the third direct current voltage output by the second H-bridge rectifier circuit and the fourth direct current voltage output by the fourth H-bridge rectifier circuit have a same voltage value, a same positive direction, and a same negative direction. In this case, the output terminal C of the second H-bridge rectifier circuit in FIG. 8 and the output terminal C of the fourth H-bridge rectifier circuit in FIG. 9 may be connected to a positive electrode of a power battery, and the output terminal D of the second H-bridge rectifier circuit in FIG. 8 and the output terminal D of the fourth H-bridge rectifier circuit in FIG. 9 may be connected to a negative electrode of the power battery, to charge the power battery.

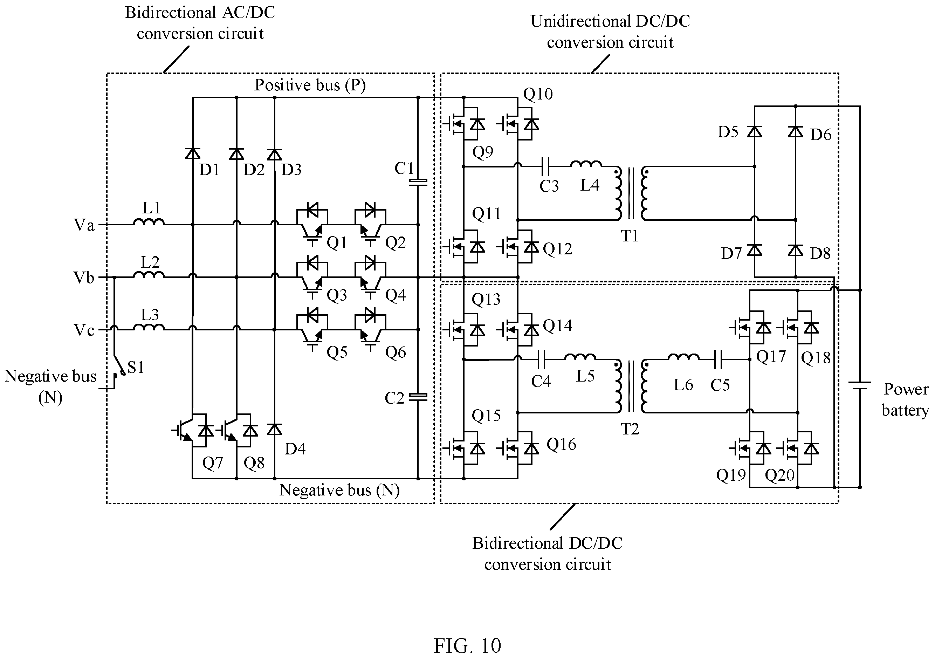

With reference to the foregoing description, for example, an on-board charging and discharging apparatus provided in an embodiment of this application may be shown in FIG. 10.

In a bidirectional AC/DC conversion circuit, phase wires on a side on which an alternating current is input is connected to inductors L1, L2, and L3. The bidirectional AC/DC conversion circuit includes: diodes D1, D2, D3, and D4; switching transistors Q7 and Q8; three bidirectional switches that are constituted by switching transistors Q1, Q2, Q3, Q4, Q5, and Q6. Cathodes of D1, D2, and D3 are connected to a capacitor C1. Q1 and Q2 constitute a bidirectional switch. One terminal of the bidirectional switch is connected to an intermediate node of Q7 and D1 and one terminal of L1, and the other terminal is connected to an intermediate node between C1 and C2. Q3 and Q4 constitute a bidirectional switch. One terminal of the bidirectional switch is connected to an intermediate node between Q8 and D2 and one terminal of L2, and the other terminal is connected to an intermediate node between C1 and C2. Q5 and Q6 constitute a bidirectional switch. One terminal of the bidirectional switch is connected to an intermediate node between D3 and D4 and one terminal of L3, and the other terminal is connected to an intermediate node between C1 and C2. Gates of the switching transistors are all connected to an external control circuit (or a controller). The control circuit implements a corresponding function of the on-board charging and discharging apparatus by controlling the switching transistors to be on or off.

In a unidirectional DC/DC conversion circuit, switching transistors Q9/Q10/Q11/Q12 constitute an H bridge; drain electrodes of Q9 and Q10 are connected to a positive terminal of C1; source electrodes of Q11 and Q12 are connected to a negative terminal of C1; an intermediate node between Q9 and Q11 is connected to C3; C3 is connected to the following L4; L4 is connected to a primary-side winding of the following T1; an intermediate node between Q10 and Q12 is connected to the other end of the primary-side winding of T1. Diodes D5, D6, D7, and D8 constitute a rectifier circuit. An intermediate node between D5 and D7 is connected to one end of a secondary-side winding of T1. An intermediate node between D6 and D8 is connected to the other end of the secondary-side winding of T1. Cathodes of D5 and D6 are connected to a positive electrode of a battery, and anodes of D7 and D8 are connected to a negative electrode of the battery.

In a bidirectional DC/DC conversion circuit, switching transistors Q13, Q14, Q15, and Q16 constitute an H bridge. Drain electrodes of Q13 and Q14 are connected to a positive terminal of C2, and source electrodes of Q15 and Q16 are connected to a negative terminal of C2. An intermediate node between Q13 and Q15 is connected to C4. C4 is connected to the following L5. L5 is connected to one end of a primary-side winding of the following T2. An intermediate node between Q14 and Q16 is connected to the other end of the primary-side winding of T2. Switching transistors Q17, Q18, Q19, and Q20 constitute an H-bridge circuit. An intermediate node between Q17 and Q19 is connected to a back terminal of C5. A front terminal of C5 is connected to a back terminal of L6. A front terminal of L6 is connected to one end of a secondary-side winding of the transformer T2. An intermediate node of Q18 and Q20 is connected to the other end of the secondary-side winding of T2. Drain electrodes of Q17 and Q18 are connected to the positive electrode of the battery, and source electrodes of Q19 and Q20 are connected to the negative electrode of the battery.

It is easily seen that a front end of the unidirectional DC/DC conversion circuit is connected to C1, that a front end of the bidirectional DC/DC conversion circuit is connected to C2, and that the unidirectional DC/DC conversion circuit and the bidirectional DC/DC conversion circuit are connected in parallel, and back ends of the unidirectional DC/DC conversion circuit and the bidirectional DC/DC conversion circuit that are connected in parallel are connected to the battery.

In the on-board charging and discharging apparatus shown in FIG. 10, the bidirectional AC/DC conversion circuit is improvement of a conventional Vienna circuit, in which some diodes are replaced with switching transistors (Q7 and Q8). In a rectification part, some circuits use diodes for rectification (the unidirectional DC/DC conversion circuit), some circuits use switching transistors for rectification (the bidirectional DC/DC conversion circuit). In the case of inversion, a rectifier circuit (the bidirectional DC/DC conversion circuit) that is constituted by switching transistors is used for rectification.

When the on-board charging and discharging apparatus shown in FIG. 10 is used for three-phase rectification, a switch S is turned off. Va, Vb and Vc are used as three-phase input terminals of the on-board charging and discharging apparatus. Two terminals connected in parallel with a power battery are used as direct current output terminals of the on-board charging and discharging apparatus.

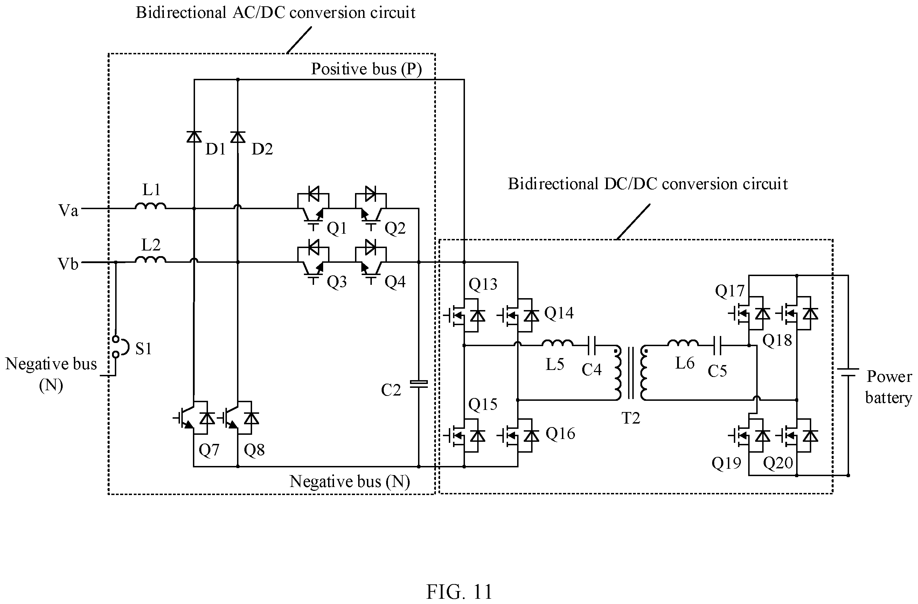

When the on-board charging and discharging apparatus shown in FIG. 10 is used for single-phase rectification or single-phase inversion, a switch S1 is turned on, Q9, Q10, Q11, Q12 are constantly turned on, and a simplified working circuit thereof is shown in FIG. 11. According to an energy transfer direction, when energy is transferred from left to right, the circuit works in a rectification state (in this case, Va and Vb are used as alternating current input terminals of the on-board charging and discharging apparatus, and two terminals connected in parallel with the power battery are used as direct current output terminals of the on-board charging and discharging apparatus). When energy is transferred from right to left, the circuit works in an inversion state (in this case, the two terminals connected in parallel with the power battery are used as direct current input terminals of the on-board charging and discharging apparatus, and Va and Vb are used as alternating current output terminals of the on-board charging and discharging apparatus). For example, during single-phase inversion, the power battery is connected to the following bidirectional DC/DC conversion circuit, and the bidirectional DC/DC conversion circuit is connected to the following bidirectional AC/DC conversion circuit. In the bidirectional AC/DC conversion circuit, Q1, Q2, Q3, and Q4 are used as an upper part of an H-bridge inverter, and Q7 and Q8 are used as a lower part of the H-bridge inverter, that is, a local circuit in the bidirectional AC/DC conversion circuit works.

Because the unidirectional DC/DC conversion circuit does not work during single-phase inversion, and only some diodes and switching transistors in the bidirectional AC/DC conversion circuit work, a forward charging power is greater than a reverse discharging power for the on-board charging and discharging apparatus shown in FIG. 10.

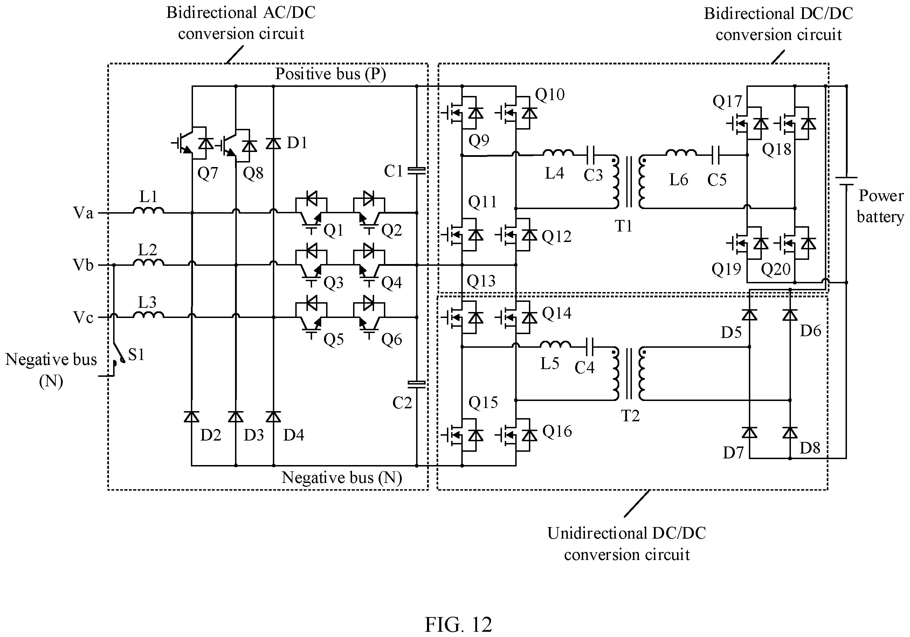

With reference to the foregoing description, for example, another on-board charging and discharging apparatus provided in an embodiment of this application may be shown in FIG. 12. The on-board charging and discharging apparatus shown in FIG. 12 is similar to the on-board charging and discharging apparatus shown in FIG. 10, except that positions of two switching transistors in the bidirectional AC/DC conversion circuit and positions of two diodes are exchanged with each other. Correspondingly, a position of the unidirectional DC/DC conversion circuit and a position the bidirectional DC/DC conversion circuit are exchanged with each other.

When the on-board charging and discharging apparatus shown in FIG. 12 is used for three-phase rectification, a switch S is turned off. Va, Vb and Vc are used as three-phase input terminals of the on-board charging and discharging apparatus. Two terminals connected in parallel with a power battery are used as direct current output terminals of the on-board charging and discharging apparatus.

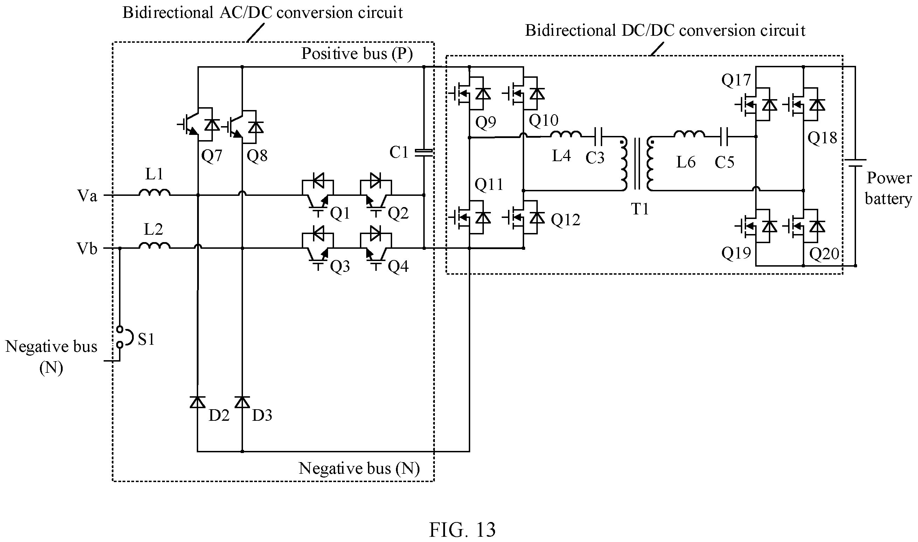

When the on-board charging and discharging apparatus shown in FIG. 12 is used for single-phase rectification or single-phase inversion, a switch S1 is turned on, Q13, Q14, Q15, and Q16 are constantly turned on, and a simplified working circuit thereof is shown in FIG. 13. According to an energy transfer direction, when energy is transferred from left to right, the circuit works in a rectification state (in this case, Va and Vb are used as alternating current input terminals of the on-board charging and discharging apparatus, and two terminals connected in parallel with the power battery are used as direct current output terminals of the on-board charging and discharging apparatus). When energy is transferred from right to left, the circuit works in an inversion state (in this case, the two terminals connected in parallel with the power battery are used as direct current input terminals of the on-board charging and discharging apparatus, and Va and Vb are used as alternating current output terminals of the on-board charging and discharging apparatus). For example, during single-phase inversion, the power battery is connected to the following bidirectional DC/DC conversion circuit, and the bidirectional DC/DC conversion circuit is connected to the following bidirectional AC/DC conversion circuit. In the bidirectional AC/DC conversion circuit, Q1, Q2, Q3, and Q4 are used as a lower part of an H-bridge inverter, and Q7 and Q8 are used as an upper part of the H-bridge inverter, that is, a local circuit in the bidirectional AC/DC conversion circuit works.

Because the unidirectional DC/DC conversion circuit does not work during single-phase inversion, and only some diodes and switching transistors in the bidirectional AC/DC conversion circuit work, a forward charging power is greater than a reverse discharging power for the on-board charging and discharging apparatus shown in FIG. 12.

When the on-board charging and discharging apparatus 200 provided in this embodiment of this application is configured to charge the charged device, the bidirectional AC/DC conversion circuit 201 converts the first alternating current voltage output by the alternating current power supply into the first direct current voltage. The unidirectional DC/DC conversion circuit 202 and the bidirectional DC/DC conversion circuit 203 work in parallel. The unidirectional DC/DC conversion circuit 202 is configured to convert the first component of the first direct current voltage into the third direct current voltage available to the charged device. The bidirectional DC/DC conversion circuit 203 is configured to convert the second component of the first direct current voltage into the fourth direct current voltage available to the charged device. Therefore, when the charged device is charged, all the circuits in the on-board charging and discharging apparatus 200 work, so that high-power charging can be implemented.

When the on-board charging and discharging apparatus 200 is configured to discharge the charged device, because the unidirectional DC/DC conversion circuit 202 can only perform unidirectional DC/DC conversion, the unidirectional DC/DC conversion circuit 202 does not work at this time. In other words, when the charged device is discharged, only some of the circuits in the on-board charging and discharging apparatus 200 work. Therefore, when the charged device is discharged, only some of the circuits in the on-board charging and discharging apparatus 200 (the bidirectional AC/DC conversion circuit 201 and the bidirectional DC/DC conversion circuit 203) work, so that low-power inversion can be implemented.

In conclusion, high-power charging and low-power inversion can be implemented by using the on-board charging and discharging apparatus 200 provided in this embodiment of this application.

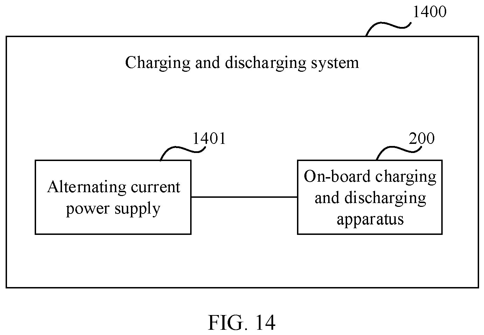

Based on a same inventive concept, an embodiment of this application further provides a charging and discharging system. Refer to FIG. 14. A charging and discharging system 1400 includes an alternating current power supply 1401 and the foregoing on-board charging and discharging apparatus 200. The alternating current power supply 1401 is configured to supply power to the on-board charging and discharging apparatus 200. In other words, the alternating current power supply 1401 may output a first alternating current voltage.

Optionally, the charging and discharging system 1400 further includes a charged device, and the on-board charging and discharging apparatus 200 is configured to charge the charged device.

Specifically, the charged device may be a power battery. For example, the charged device may be a power battery such as a nickel metal hydride battery, a lithium battery, or a lead-acid battery. When discharging, the charging and discharging system may charge a load such as an induction cooker, a rice cooker, a mobile phone, or another terminal.

It is clearly that a person skilled in the art can make various modifications and variations to this application without departing from the scope of this application. This application is intended to cover these modifications and variations of this application provided that they fall within the scope of protection defined by the following claims and their equivalent technologies.

In addition, it should be understood that system structures and service scenarios provided in the embodiments of this application are mainly intended to explain some possible implementations of the technical solutions in this application, and should not constitute any limitation on the technical solutions in this application. A person of ordinary skill in the art may know that as a system evolves and a new service scenario emerges, the technical solutions provided in this application are also applicable to a same or similar technical problem.

## Claims

1. An on-board charging and discharging apparatus, comprising a bidirectional alternating current/direct current AC/DC conversion circuit, a unidirectional direct current/direct current DC/DC conversion circuit, and a bidirectional DC/DC conversion circuit, wherein a direct current terminal of the bidirectional AC/DC conversion circuit is electrically connected to a first direct current terminal of the unidirectional DC/DC conversion circuit and a first direct current terminal of the bidirectional DC/DC conversion circuit;
the bidirectional AC/DC conversion circuit is configured to convert a received first alternating current voltage into a first direct current voltage, or convert a second direct current voltage output by the bidirectional DC/DC conversion circuit into a second alternating current voltage;
the unidirectional DC/DC conversion circuit is configured to convert a first component of the first direct current voltage into a third direct current voltage; and
the bidirectional DC/DC conversion circuit is configured to convert a second component of the first direct current voltage into a fourth direct current voltage, or convert a received fifth direct current voltage into the second direct current voltage, the first component and the second component constitute the first direct current voltage, and a voltage value of the third direct current voltage is equal to a voltage value of the fourth direct current voltage.

2. The on-board charging and discharging apparatus according to claim 1, further comprising:
a controller, configured to control the bidirectional AC/DC conversion circuit to convert the first alternating current voltage into the first direct current voltage, control the unidirectional DC/DC conversion circuit to convert the first component into the third direct current voltage, and control the bidirectional DC/DC conversion circuit to convert the second component into the fourth direct current voltage.

3. The on-board charging and discharging apparatus according to claim 2, wherein the controller is further configured to:
control the bidirectional DC/DC conversion circuit to convert the fifth direct current voltage into the second direct current voltage, and control the bidirectional AC/DC conversion circuit to convert the second direct current voltage into the second alternating current voltage.

4. The on-board charging and discharging apparatus according to any one of claims 1 to 3, wherein an alternating current terminal of the bidirectional AC/DC conversion circuit is a three-phase alternating current terminal, and a first alternating current terminal of the three-phase alternating current terminal is connected to a negative bus through a switch unit.

5. The on-board charging and discharging apparatus according to claim 4, wherein the bidirectional AC/DC conversion circuit comprises a first single-phase converter, a second single-phase converter, a third single-phase converter, a first bus capacitor, and a second bus capacitor; and
a positive terminal of the first bus capacitor is connected to a positive bus, a negative terminal of the first bus capacitor is connected to a positive terminal of the second bus capacitor, a negative terminal of the second bus capacitor is connected to the negative bus, an alternating current terminal of the first single-phase converter is the first alternating current terminal, an alternating current terminal of the second single-phase converter is a second alternating current terminal of the three-phase alternating current terminal, an alternating current terminal of the third single-phase converter is a third alternating current terminal of the three-phase alternating current terminal, and a direct current terminal of the first single-phase converter, a direct current terminal of the second single-phase converter, and a direct current terminal of the third single-phase converter are all connected to the negative terminal of the first bus capacitor.

6. The on-board charging and discharging apparatus according to claim 5, wherein when the switch unit is open, the first single-phase converter, the second single-phase converter, and the third single-phase converter are configured to implement three-phase AC/DC conversion; and
when the switch unit is closed, the first single-phase converter and the second single-phase converter are configured to implement single-phase AC/DC conversion or single-phase DC/AC conversion.

7. The on-board charging and discharging apparatus according to claim 5 or 6, wherein the first single-phase converter comprises: a first inductor, wherein a first terminal of the first inductor is connected to the first alternating current terminal; a first bidirectional switch, wherein the first bidirectional switch is bridge-connected between a second terminal of the first inductor and the negative terminal of the first bus capacitor; and a first diode and a first switching transistor, wherein the first diode is bridge-connected between the positive bus and the second terminal of the first inductor and the first switching transistor is bridge-connected between the negative bus and the second terminal of the first inductor, or the first diode is bridge-connected between the negative bus and the second terminal of the first inductor and the first switching transistor is bridge-connected between the positive bus and the second terminal of the first inductor;
the second single-phase converter comprises: a second inductor, wherein a first terminal of the second inductor is connected to the second alternating current terminal; a second bidirectional switch, wherein the second bidirectional switch is bridge-connected between a second terminal of the second inductor and the negative terminal of the first bus capacitor; and a second diode and a second switching transistor, wherein the second diode is bridge-connected between the positive bus and the second terminal of the second inductor and the second switching transistor is bridge-connected between the negative bus and the second terminal of the second inductor, or the second diode is bridge-connected between the negative bus and the second terminal of the second inductor and the second switching transistor is bridge-connected between the positive bus and the second terminal of the second inductor; and
the third single-phase converter comprises: a third inductor, wherein a first terminal of the third inductor is connected to the third alternating current terminal; a third bidirectional switch, wherein the third bidirectional switch is bridge-connected between a second terminal of the third inductor and the negative terminal of the first bus capacitor; and a third diode and a fourth diode, wherein the third diode is bridge-connected between the positive bus and the second terminal of the third inductor and the fourth diode is bridge-connected between the negative bus and the second terminal of the third inductor.

8. The on-board charging and discharging apparatus according to claim 7, wherein the first bidirectional switch comprises a third switching transistor and a fourth switching transistor that are reversely connected in series, the second bidirectional switch comprises a fifth switching transistor and a sixth switching transistor that are reversely connected in series, and the third bidirectional switch comprises a seventh switching transistor and an eighth switching transistor that are reversely connected in series.

9. The on-board charging and discharging apparatus according to any one of claims 1 to 8, wherein the unidirectional DC/DC conversion circuit comprises:
a first H-bridge rectifier circuit, wherein the first H-bridge rectifier circuit comprises switching transistors, and is configured to adjust the first component;
a first isolation transformer, wherein a primary-side winding of the first isolation transformer is coupled to the first H-bridge rectifier circuit, and a secondary-side winding of the first isolation transformer is coupled to a second H-bridge rectifier circuit; and
the second H-bridge rectifier circuit, wherein the second H-bridge rectifier circuit comprises diodes, and is configured to rectify the adjusted first component, and output the third direct current voltage.

10. The on-board charging and discharging apparatus according to any one of claims 1 to 9, wherein the bidirectional DC/DC conversion circuit comprises:
a third H-bridge rectifier circuit, wherein the third H-bridge rectifier circuit comprises switching transistors, and is configured to adjust the input second component;
a second isolation transformer, wherein a primary-side winding of the second isolation transformer is coupled to the third H-bridge rectifier circuit, and a secondary-side winding of the second isolation transformer is coupled to a fourth H-bridge rectifier circuit; and
the fourth H-bridge rectifier circuit, wherein the fourth H-bridge rectifier circuit comprises switching transistors, and is configured to rectify the adjusted second component, and output the fourth direct current voltage.

11. The on-board charging and discharging apparatus according to claim 10, wherein the fourth H-bridge rectifier circuit is further configured to:
adjust the fifth direct current voltage; and
the third H-bridge rectifier circuit is further configured to:
rectify the adjusted fifth direct current voltage, and output the second direct current voltage.

12. A charging and discharging system, comprising an alternating current power supply and the on-board charging and discharging apparatus according to any one of claims 1 to 11, wherein the alternating current power supply is configured to supply power to the on-board charging and discharging apparatus.

13. The system according to claim 12, further comprising a charged device, wherein the on-board charging and discharging apparatus is configured to charge the charged device.
